# FASCICULE DE BREVET EUROPEEN

(11) **EP 0 674 299 B1**
(45) Date de publication et mention de la délivrance du brevet: **26.01.2000**
(21) Numéro de dépôt: 95400275.4
(22) Date de dépôt: 10.02.1995
(51) Int. Cl.: G08G 5/02, G05D 1/06, G01C 21/00

(54) **Procédé et dispositif pour la prévention des collisions des aérodynes avec les obstacles du relief**
Verfahren und Vorrichtung zum Kollisionsschutz zwischen Flugzeugen und Hindernissen des Reliefs
Method and device for the avoidance of collisions between aircraft and relief obstacles

(30) Priorité: 24.03.1994 FR 9404118
(43) Date de publication de la demande: 27.09.1995
(73) Titulaire: SEXTANT AVIONIQUE, 92366 Meudon la Forêt Cédex (FR)
(72) Inventeur: Simon, Georges-Henri, F-91320 Wissous (FR)
(74) Mandataire: de Saint-Palais, Arnaud Marie

(56) Documents cités:
- EP-A- 0 565 399
- WO-A-85/03566
- WO-A-92/21077
- US-A- 5 111 400

## Description

La présente invention concerne un procédé pour détecter et déterminer les risques de collision des aérodynes avec les obstacles du relief, en particulier, durant les phases de vol où les aérodynes se trouvent à faible altitude, c'est-à-dire, avant l'atterrissage et après le décollage.

Elle s'applique notamment, mais non exclusivement, au transport aérien moyen et long courrier et aux pistes d'atterrissage entourées d'un relief accidenté.

A l'heure actuelle, de nombreux accidents aériens se sont produits du fait de la présence de montagnes ou de collines à proximité des pistes d'atterrissage, ou lors d'une phase de vol à basse altitude.

Pour tenter de réduire le nombre de ces accidents, on a déjà proposé d'équiper les aérodynes de dispositifs spécifiques permettant de détecter les risques de collision avec le relief.
Ainsi, selon la demande de brevet européen 0 565 399, un tel dispositif comprend une mémoire de masse stockant une base de données représentant au moins une partie substantielle du globe terrestre, selon un maillage à plusieurs niveaux, plus précis notamment au voisinage des aéroports, et des moyens de traitement recevant des informations de navigation provenant du poste de commande de l'aérodyne, et permettant à partir de ces informations de générer une alarme si un risque de collision est détecté compte tenu de la configuration du terrain survolé et de la trajectoire de l'aérodyne, évaluée à l'aide des dites informations de navigation.
Un dispositif analogue est également décrit dans le brevet US 5 111 400.

De tels dispositifs présentent l'inconvénient d'avoir à équiper les aérodynes d'une mémoire de masse de très grande capacité pour pouvoir stocker les données géographiques des zones susceptibles d'être survolées par l'aérodyne, et d'un calculateur additionnel suffisamment puissant pour pouvoir évaluer en temps réel avec un grand degré de sécurité les risques de collisions avec les obstacles du terrain survolé.

Par ailleurs, la plupart des aérodynes de transport moyen et long courrier sont équipés d'un système ADS (Automatic Dependent Surveillance) dont le rôle est de regrouper les informations de position, de vitesse et de route fournies par les instruments de navigation, de les associer avec des informations d'identification de l'aérodyne, et d'émettre périodiquement ces informations par voie hertzienne sous forme de messages vers une station de contrôle aérien située au sol, à portée radioélectrique.

La présente invention a pour but de supprimer les inconvénients évoqués ci-avant en exploitant un tel système pour déterminer la présence d'obstacles sur la trajectoire de l'aérodyne, et s'il y a lieu, pour déterminer les manoeuvres d'évitement à effectuer par le pilote.

Elle propose à cet effet un procédé pour la prévention des collisions d'un aérodyne avec des obstacles formés par le relief survolé. Ce procédé est caractérisé en ce qu'il comprend les étapes suivantes :
- périodiquement, à bord dudit aérodyne, la lecture d'informations de navigation propres à cet aérodyne, l'élaboration d'un message de localisation comprenant un code d'identification de l'aérodyne et lesdites informations de navigation, et l'émission omnidirectionnelle de ce message de localisation par voie hertzienne, vers une station de surveillance aérienne d'une zone géographique située à portée radioélectrique,
- l'écoute en permanence par ladite station et la réception de messages de localisation émis par des aérodynes avoisinants se trouvant à portée radioélectrique,
- l'identification par ladite station des aérodynes avoisinants et la détermination de leurs trajectoires futures respectives, à l'aide des informations de navigation contenues dans les messages de localisation reçus,
- pour chaque aérodyne identifié, la localisation par ladite station de la trajectoire future dudit aérodyne dans ladite zone géographique, l'évaluation par ladite station des risques de collision dudit aérodyne avec un obstacle du relief à l'aide de ladite trajectoire future localisée, et
- si un risque de collision est détecté par ladite station, l'élaboration par ladite station de commandes d'évitement à effectuer par le pilote de l'aérodyne pour éviter la collision détectée, et la transmission de ces commandes au pilote sous forme d'un message d'évitement.

Contrairement aux préjugés de l'homme du métier qui recherche naturellement à augmenter l'autonomie des aérodynes en ce qui concerne leur sécurité, ce procédé vise à faire exécuter par une station au sol les calculs d'anticollision et d'évitement. Il s'avère que ce procédé offre une bien plus grande sécurité que celle conférée par un système autonome de type GPWS ("Ground Proximity Warning System") qui ne permet absolument pas de déterminer de manière suffisamment précise et rapide la configuration du relief environnant, nécessaire à l'élaboration d'une stratégie d'évitement d'obstacle efficace et d'une sécurité suffisante. De plus, ce résultat est obtenu par l'invention sans alourdir l'équipement électronique des aérodynes de transport moyen et long courrier.

Avantageusement, le procédé selon l'invention comprend l'insertion dans le message de localisation d'un indicateur de début de phase de descente lorsque l'aérodyne est en phase d'approche de la piste d'atterrissage prévue. Cet indicateur permet à la station de surveillance aérienne de déterminer quelle stratégie d'évitement appliquer. En effet, si l'aérodyne est dans une telle phase de vol, il est normal que sa trajectoire intercepte le sol. La station ne lui fournira alors pas d'ordres d'évitement, mais lui signalera simplement les obstacles se trouvant sur sa trajectoire.

Pour mettre en oeuvre ce procédé, on utilise un système ADS à bord de chaque aérodyne, qui émet périodiquement par voie hertzienne les messages de localisation contenant les informations d'identification et de navigation propres à l'aérodyne vers une station située au sol à portée radioélectrique, ce système ADS étant conçu pour recevoir et traiter des messages d'évitement.
La station au sol comprend par ailleurs un calculateur ayant accès à une base de données cartographique décrivant la zone géographique à surveiller. Ce calculateur est conçu pour traiter tous les messages de localisation reçus par la station et suivre en corrélation avec les données cartographiques auxquelles il a accès, les trajectoires respectives des aérodynes qui ont émis des messages de localisation. A partir de ce traitement, il détermine les obstacles se trouvant sur ces trajectoires et élabore des ordres d'évitement d'obstacle qui sont ensuite transmis aux aérodynes concernés. Pour cela, il complète le dernier message de localisation reçu de l'aérodyne avec les ordres d'évitement ainsi déterminés.

Un mode de réalisation du procédé selon l'invention sera décrit ci-après, à titre d'exemple non limitatif, avec référence aux dessins annexés dans lesquels :
La figure 1 représente schématiquement un système anti-collision avec le sol installé à bord d'un aérodyne ;
la figure 2 représente schématiquement le traitement des données provenant d'un aérodyne et réalisé au niveau de la station au sol.

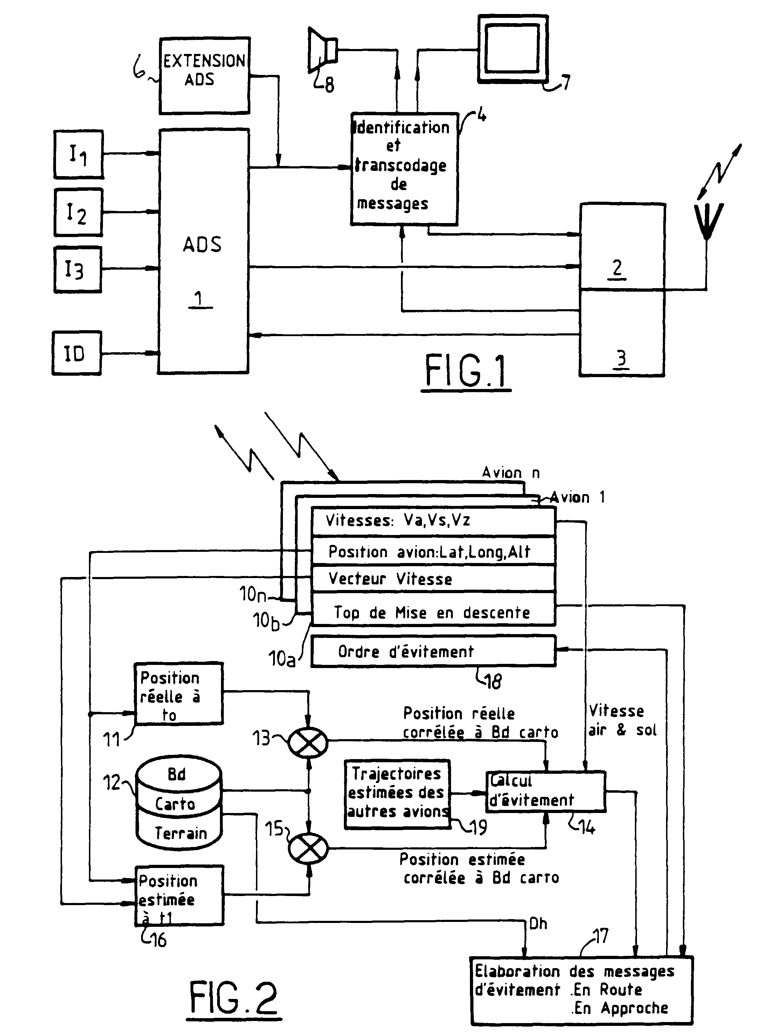

Dans l'exemple représenté figure 1, le système anti-collision comprend un système ADS (Automatic Dependent Surveillance) 1, des instruments de navigation I1,I2,I3 connectés au système ADS, un émetteur 2 et un récepteur 3 VHF ayant la capacité de transmettre des données, et un équipement d'extension 6 du système ADS 1.

De plus, ce système comprend un boîtier d'identification et de transcodage 4 des messages "DATA LINK" reçus par l'aérodyne en provenance du sol, raccordé à un moyen de visualisation tel qu'un écran 7, et un moyen d'alerte sonore 8. L'équipement d'extension ADS 6 permet de transmettre le vecteur vitesse et un indicateur de mise en descente.

Le système ADS 1 et son équipement d'extension 6 sont conçus pour effectuer les opérations suivantes :
- la lecture périodique des informations de navigation en provenance des instruments de navigation I1,I2,I3, et du bloc d'identification ID,
- à chaque lecture, la constitution d'un message de localisation de l'aérodyne à l'aide d'un code d'identification de l'aérodyne et desdites informations de navigation, et le transfert de ce message à destination de l'émetteur 2 pour être émis vers une station de contrôle aérien,
- lorsque le début de la phase d'approche précédant l'atterrissage est détecté, l'insertion d'un "top de mise en descente" dans le message de localisation à émettre.

L'émission d'un message vers la station au sol s'effectue automatiquement et périodiquement, et implique une séquence d'actions définie ci-après.

Le récepteur 3 est en permanence à l'écoute des canaux de transmission et détecte les intervalles de temps pendant lesquels ces canaux sont libres. Dès qu'il détecte qu'un canal est libre, il informe l'émetteur 2 qu'il peut émettre. Pendant que l'émetteur 2 émet, le récepteur 3 reste à l'écoute pour surveiller la transmission et s'assurer que celle-ci n'est pas perturbée par un autre utilisateur du canal. Si tel n'est pas le cas, le récepteur avertit l'émetteur que son message n'a pas été émis correctement et qu'il doit l'émettre à nouveau.

Le récepteur 3 reste en permanence à l'écoute et transmet tous les messages de données qu'il reçoit de la station sol au boîtier d'identification et de transcodage 4, ce dernier sélectionnant les messages le concernant à l'aide du code d'identification de l'aérodyne.

Si ces messages contiennent des indications de risque de collision avec le sol ou des ordres d'évitement, il en informe le pilote en transmettant ces informations aux moyens d'alerte visuelle 7 ou sonore 8.

Sur la figure 2, tous les messages de localisation 10a, 10b, ... 10n, provenant de différents aéronefs reçus par la station située au sol sont stockés dans l'ordre de leur arrivée et sont traités les uns après les autres par un calculateur couplé à des moyens émetteurs et récepteurs d'ondes hertziennes et ayant accès à une base de données cartographique 12 de la zone géographique que surveille la station.

Cette base de données comprend notamment les altitudes d'une multiplicité de points régulièrement répartis sur toute la zone géographique considérée.

Les messages de localisation 10a, 10b, ... 10n contiennent notamment :
- un code d'identification de l'aérodyne émetteur
- les vitesses de l'aérodyne par rapport à l'air et le sol et la vitesse verticale,
- sa position en longitude et latitude et son altitude,
- son vecteur vitesse,
- la date t0 à laquelle ont été relevées les données de navigation contenues dans le message, et éventuellement,
- un indicateur de mise en descente indiquant si l'aérodyne a amorcé la phase d'approche de la piste d'atterrissage.

Pour traiter chaque message de localisation 10a reçu, le calculateur de la station lit la position de l'aérodyne fournie dans ce message. Cette position correspond à la position réelle 11 à la date t0. Elle est utilisée pour positionner l'aérodyne et sa trajectoire dans la zone géographique surveillée par rapport aux différents objets cartographiques lus dans la base de données 12.
Cette position réelle à la date t0 et le vecteur vitesse, fournis par le message de localisation, sont ensuite exploités par le calculateur pour déterminer la trajectoire future de l'aérodyne et estimer la position 16 de l'aérodyne un intervalle de temps prédéterminé plus tard, c'est-à-dire à la date t1 égale, par exemple, à t0 + 20 secondes. La portion de trajectoire entre la position 11 à t0 et la position estimée 16 à tl est ensuite localisée dans l'espace dans la zone géographique surveillée à l'aide des données cartographiques de la base de données 12.
Si cette portion de trajectoire intercepte un obstacle du relief, le calculateur effectue un calcul d'évitement à partir des informations suivantes :
- la position réelle à t0 et celle estimée à t1,
- les vitesses air et sol à t0,
- la configuration du relief entre les positions 11 à t0 et 16 à t1,
- la hauteur dite de "décision" Dh correspondant à la hauteur minimum pour remettre les gaz et reporter l'atterrissage, fournie par la base de données 12,
- les trajectoires estimées 19 respectives des autres aérodynes.

Ce calcul détermine la trajectoire que doit suivre l'aérodyne pour éviter l'obstacle compte tenu des capacités de l'aérodyne. Le calculateur de la station détermine ensuite les commandes 18 de pilotage à effectuer pour éviter la collision.

Ces commandes 18 sont émises par la station. Ainsi, l'aérodyne identifié par le code d'identification inclus dans le message peut capter celui-ci et reconnaître qu'il en est le destinataire.

Dans le cas où l'aérodyne a amorcé la phase de descente (indicateur de mise en descente présent), seuls la présence de l'obstacle et sa distance sont indiqués dans le message renvoyé en direction de l'aérodyne.

De cette manière, le système peut recevoir tous les messages contenant des ordres d'évitement ou les indications d'obstacles. Les informations ainsi reçues sont transférées vers les moyens de visualisation 7 et d'alerte sonore 8, tandis qu'un message d'accusé de réception est envoyé en direction de la station.
Tant que la station n'a pas reçu ce message d'accusé de réception, elle répète l'émission du message d'évitement.

## Revendications

1. Procédé pour la prévention des collisions d'un aérodyne avec des obstacles formés par le relief survolé,
caractérisé en ce qu'il comprend les étapes suivantes :
- périodiquement, à bord dudit aérodyne, la lecture d'informations de navigation propres à cet aérodyne, l'élaboration d'un message de localisation comprenant un code d'identification de l'aérodyne et lesdites informations de navigation, et l'émission omnidirectionnelle de ce message de localisation par voie hertzienne, vers une station de surveillance aérienne d'une zone géographique située à portée radioélectrique,
- l'écoute en permanence par ladite station et la réception de messages de localisation (10a,10b,...10n) émis par des aérodynes avoisinants se trouvant à portée radioélectrique,
- l'identification par ladite station des aérodynes avoisinants et la détermination de leurs trajectoires futures respectives, à l'aide des informations contenues dans les messages de localisation reçus,
- pour chaque aérodyne identifié, la localisation (13,15) par ladite station de la trajectoire future dudit aérodyne dans ladite zone géographique, la détection par ladite station des risques de collision dudit aérodyne avec un obstacle du relief, et
- si un risque de collision est détecté par ladite station, l'élaboration (14) par ladite station de commandes d'évitement (18) à exécuter par le pilote de l'aérodyne pour éviter la collision détectée, et la transmission de ces commandes au pilote sous forme d'un message d'évitement.

2. Procédé selon la revendication 1,
caractérisé en ce qu'un message de localisation d'un aérodyne comprend :
- son code d'identification,
- ses vitesses air et sol et sa vitesse verticale,
- sa position réelle en longitude et latitude et son altitude,
- son vecteur vitesse.

3. Procédé selon l'une des revendications 1 et 2,
caractérisé en ce que ledit message d'évitement comprend le dernier message de localisation de l'aérodyne reçu, et les commandes d'évitement (18) à effectuer par le pilote dudit aérodyne.

4. Procédé selon l'une des revendications précédentes,
caractérisé en ce qu'il comprend :
- l'émission omnidirectionnelle (17) par la station dudit message d'évitement,
- à bord de chaque aérodyne avoisinant, l'écoute en permanence, la réception de messages d'évitement émis par la station, la sélection des messages d'évitement reçus qui concernent ledit aérodyne grâce au code d'identification, la transmission des commandes d'évitement (18) au pilote dudit aérodyne, et l'envoi d'un message d'accusé de réception.

5. Procédé selon l'une des revendications précédentes,
caractérisé en ce que la station localise ladite trajectoire à l'aide d'une base de données géographique (12) comprenant notamment les altitudes d'une multiplicité de points régulièrement répartis sur toute ladite zone géographique.

6. Procédé selon l'une des revendications 2 à 5,
caractérisé en ce que la station estime la trajectoire de chaque aérodyne à l'aide de la position réelle (11) et du vecteur vitesse fournis dans le dernier message de localisation reçu dudit aérodyne, et estime la position (16) qu'occupera l'aérodyne, un intervalle de temps prédéterminé plus tard.

7. Procédé selon la revendication 6,
caractérisé en ce que, si la trajectoire estimée pendant ledit intervalle de temps intercepte un obstacle, la station détermine (14) lesdites commandes d'évitement à partir des informations suivantes :
- la position réelle (11) fournie dans le dernier message de localisation et la position estimée (16),
- les vitesses air et sol fournies dans ledit message,
- la configuration du relief entre la position réelle et la position estimée, fournie par la base de données cartographique (12),
- la hauteur dite de "décision" Dh correspondant à la hauteur minimum pour remettre les gaz et reporter l'atterrissage, fournie par ladite base de données (12),
- les trajectoires estimées (19) respectives des autres aérodynes à portée radioélectrique de la station.

8. Procédé selon l'une des revendications précédentes,
caractérisé en ce que les messages de localisation comprennent également un indicateur de mise en descente indiquant si l'aérodyne a amorcé la phase d'approche de la piste d'atterrissage, la présence de cet indicateur dans le message de localisation étant exploité par la station pour déterminer quelle stratégie d'évitement appliquer en cas de risque de collision.

9. Procédé selon l'une des revendications 1 à 7,
caractérisé en ce que les messages de localisation comprennent également un indicateur de mise en descente indiquant si l'aérodyne a amorcé la phase d'approche de la piste d'atterrissage, la présence cet indicateur dans le message de localisation indiquant à la station qu'elle doit simplement indiquer la présence d'un obstacle et sa distance dans le message d'évitement retourné.

10. Dispositif pour la prévention des collisions d'un aérodyne avec des obstacles formés par le relief survolé,
caractérisé en ce qu'il comprend :
- à bord dudit aérodyne, un système ADS (Automatic Surveillance System) (1, 6) connecté aux équipements électroniques (I1, I2, I3) de l'aérodyne comportant notamment des instruments de navigation et des moyens d'émission (2) et de réception (3) d'ondes hertziennes, et un boîtier (4) d'identification et de transcodage des messages reçus, le système ADS (1, 6) comprenant des moyens pour lire périodiquement des informations de navigation propres à cet aérodyne, et pour élaborer des messages de localisation comprenant un code d'identification de l'aérodyne et lesdites informations de navigation, les moyens (2, 3) d'émission et de réception comprenant des moyens pour émettre de manière omnidirectionnelle par voie hertzienne les messages de localisation vers une station de surveillance aérienne d'une zone géographique située à portée radioélectrique, et
- dans la dite station, un calculateur couplé à des moyens d'émission et de réception d'ondes hertziennes et à une base de données géographique décrivant ladite zone géographique, le calculateur comprenant des moyens pour identifier les aérodynes avoisinants et pour déterminer leurs trajectoires futures respectives, à l'aide des informations contenues dans les messages de localisation reçus, des moyens pour localiser la trajectoire future de chaque aérodyne identifié dans ladite zone géographique et pour détecter les risques de collision dudit aérodyne avec un obstacle du relief, et des moyens pour élaborer des commandes d'évitement (18) à exécuter par le pilote de l'aérodyne, si un risque de collision d'un aérodyne identifié avec un obstacle du relief est détecté, les moyens d'émission et de réception comprenant des moyens pour écouter permanence et recevoir des messages de localisation (10a,10b,...10n) émis par des aérodynes avoisinants se trouvant à portée radioélectrique, et des moyens pour transmettre les commandes d'évitement élaborées, sous la forme d'un message d'évitement, au pilote de l'aérodyne pour lequel un risque de collision a été détecté.

## Patentansprüche

1. Verfahren zum Verhindern von Kollisionen eines Luftfahrzeugs mit durch das überflogene Gelände gebildeten Hindernissen,
dadurch gekennzeichnet, daß es die folgenden Schritten umfaßt:
- an Bord des Luftfahrzeugs das regelmäßig Lesen von Navigationsinformationen, die diesem Luftfahrzeug eigen sind, das Erzeugen einer Ortungsmeldung, die einen Identifikations-Code für das Luftfahrzeug und die Navigationsinformationen umfaßt, und das ungerichtete Aussenden dieser Ortungsmeldung per Funk zu einer Luftüberwachungsstation einer in Funkreichweite gelegenen geographischen Zone,
- seitens der Station das ständige Abhören und den Empfang von Ortungsmeldungen (10a,10b...10n), die von den sich nähernden, in Funkreichweite befindlichen Luftfahrzeugen ausgesendet werden,
- die Identifikation der sich nähernden Luftfahrzeuge durch die Station und die Bestimmung ihrer jeweiligen zukünftigen Flugbahnen mit Hilfe der in den empfangenen Ortungsmeldungen enthaltenen Informationen,
- für jedes identifizierte Luftfahrzeug die Ortung (13,15) der zukünftigen Flugbahn des Luftfahrzeugs in der geographischen Zone durch die Station, die Erkennung der Kollisionsgefahren des Luftfahrzeugs mit einem Gelände-Hindernis durch die Station, und
- falls von der Station eine Kollisionsgefahr erkannt wird, das Erzeugen (14) von Ausweichbefehlen (18) durch die Station, die vom Piloten des Luftfahrzeugs auszuführen sind, um die erkannte Kollision zu vermeiden, und die Übertragung dieser Befehle an den Piloten in Form einer Ausweichmeldung.

2. Verfahren nach Anspruch 1, dadurch gekennzeichnet, daß eine Ortungsmeldung eines Luftfahrzeugs folgendes umfaßt:
- seinen Identifikations-Code,
- seine Flug- und Grundgeschwindigkeit und seine Vertikalgeschwindigkeit,
- seine tatsächliche Position in Länge und Breite sowie seine Höhe,
- seinen Geschwindigkeitsvektor.

3. Verfahren nach einem der Ansprüche 1 und 2, dadurch gekennzeichnet, daß die Ausweichmeldung die zuletzt empfangene Ortungsmeldung des Luftfahrzeugs und die durch den Piloten des Luftfahrzeugs auszuführenden Ausweichbefehle (18) umfaßt.

4. Verfahren nach einem der vorhergehenden Ansprüche, dadurch gekennzeichnet, daß es folgendes umfaßt:
- das ungerichtete Aussenden (17) der Ausweichmeldung durch die Station,
- an Bord jedes sich nähernden Luftfahrzeugs das ständige Abhören, den Empfang von Ausweichmeldungen, die von der Station gesendet werden, die Auswahl der empfangenen Ausweichmeldungen, die das Luftfahrzeug betreffen, anhand des Identifikations-Codes, die Übertragung der Ausweichbefehle (18) an den Piloten des Luftfahrzeugs und das Senden einer Meldung zur Empfangsbestätigung.

5. Verfahren nach einem der vorhergehenden Ansprüche, dadurch gekennzeichnet, daß die Station die Flugbahn mit Hilfe einer geographischen Datenbank (12) ortet, die insbesondere die Höhen einer Vielzahl von gleichmäßig über die gesamte geographische Zone hinweg verteilten Punkten umfaßt.

6. Verfahren nach einem der Ansprüche 2 bis 5, dadurch gekennzeichnet, daß die Station die Flugbahn jedes Luftfahrzeugs mit Hilfe der tatsächlichen Position (11) und des Geschwindigkeitsvektors, die mit der zuletzt empfangenen Ortungsmeldung des Luftfahrzeugs geliefert wurden, und die Position (16), die das Luftfahrzeug ein vorbestimmtes Zeitintervall später einnehmen wird, schätzt.

7. Verfahren nach Anspruch 6, dadurch gekennzeichnet, daß, wenn die während des Zeitintervalls geschätzte Flugbahn auf ein Hindernis trifft, die Station die Ausweichbefehle ausgehend von den folgenden Informationen bestimmt (14):
- der mit der letzten Ortungsmeldung gelieferten tatsächlichen Position (11) und der geschätzten Position (16),
- der Flug- und Grundgeschwindigkeit, die mit der Meldung geliefert wurden,
- der Beschaffenheit des Relliefs zwischen der tatsächlichen Position und der geschätzten Position, die durch die kartographische Datenbank (12) bereitgestellt wird,
- der sogenannten "Entscheidungs"-Höhe Dh, die der Mindesthöhe zum Hinausfliegen über die Landemarke und zum Melden der Landung entspricht, die durch die Datenbank (12) geliefert wird,
- der jeweiligen geschätzten Flugbahnen (19) der anderen Luftfahrzeuge in Funkreichweite zur Station.

8. Verfahren nach einem der vorhergehenden Ansprüche, dadurch gekennzeichnet, daß die Ortungsmeldungen auch noch einen Landeanflugs-Indikator aufweisen, der anzeigt, ob das Luftfahrzeug mit der Phase des Anflugs auf die Landebahn begonnen hat, wobei das Vorliegen dieses Indikators in der Ortungsmeldung von der Station dazu genutzt wird, zu bestimmen, welche Ausweichstrategie im Fall einer Kollisionsgefahr anzuwenden ist.

9. Verfahren nach einem der Ansprüche 1 bis 7, dadurch gekennzeichnet, daß die Ortungsmeldungen auch einen Landeanflugs-Indikator umfassen, der anzeigt, ob das Luftfahrzeug mit der Phase des Anflugs auf die Landebahn begonnen hat, wobei das Vorliegen dieses Indikators in der Ortungsmeldung der Station anzeigt, daß sie in der zurückgesendeten Ausweichmeldung einfach das Vorliegen eines Hindernisses und seine Entfernung angeben muß.

10. Vorrichtung zum Verhindern von Kollsionen eines Luftfahrzeugs mit durch das überflogene Gelände gebildeten Hindernissen,
dadurch gekennzeichnet, daß sie folgendes umfaßt:
- an Bord des Luftfahrzeugs ein ADS (Automatic Surveillance System)-System (1, 6), das an die elektronischen Einrichtungen (I1, I2, I3) des Luftfahrzeugs angeschlossen ist, die insbesondere Navigationsinstrumente sowie Sendemittel (2) und Empfangsmittel (3) für Hertzsche Wellen und ferner ein Gehäuse (4) zur Identifikation und zur Umkodierung der empfangenen Meldungen umfaßt, wobei das ADS-System (1, 6) Mittel zum regelmäßigen Lesen der diesem Luftfahrzeug eigenen Navigationsinformationen und zum Erzeugen der Ortungsmeldungen, die einen Identifikations-Code für das Luftfahrzeug und die Navigationsinformationen enthalten, umfaßt, wobei die Sende- bzw. Empfangsmittel (2, 3) Mittel zum ungerichteten Aussenden der Ortungsmeldungen per Funk zu einer Luftüberwachungsstation einer in Funkreichweite gelegenen geographischen Zone aufweisen, und
- in der Station einen Rechner, der mit Mitteln zum Senden und zum Empfang von Hertzschen Wellen und mit einer geographischen Datenbank, die die geographische Zone beschreibt, gekoppelt ist, wobei der Rechner Mittel zum Identifizieren der sich nähernden Luftfahrzeuge und zum Bestimmen ihrer entsprechenden zukünftigen Flugbahnen mit Hilfe der in den empfangenen Ortungsmeldungen enthaltenen Informationen, Mittel zum Orten der zukünftigen Flugbahn jedes in der geographischen Zone identifizierten Luftfahrzeugs und zum Erkennen der Kollisionsgefahren des Luftfahrzeugs mit einem Gelände-Hindernis, sowie Mittel zum Erzeugen der Ausweichbefehle (18) umfaßt, die durch den Piloten des Luftfahrzeugs auszuführen sind, falls eine Kollisionsgefahr eines identifizierten Luftfahrzeugs mit einem Gelände-Hindernis erkannt wird, wobei die Sende- und Empfangsmittel Mittel zum ständigen Abhören und Empfangen der Ortungsmeldungen (10a,10b,...10n), die von den sich nähernden Luftfahrzeugen ausgesandt werden, welche sich in Funkreichweite befinden, und Mittel zum Übertragen der erzeugten Ausweichbefehle in Form einer Ausweichmeldung an den Piloten des Luftfahrzeugs, für das eine Kollisionsgefahr erkannt wurde, umfassen.

## Claims

1. A method for preventing collisions between an aerodyne and obstacles formed by the relief flown over, characterized in that said method comprises the following stages:
- periodically, on board said aerodyne, the reading of navigational data specific to this aerodyne, the drawing up of a tracking message comprising a code identifying said aerodyne and said navigational data, and the omnidirectional transmission of this tracking message via Hertzian waves to an air surveillance station for a geographical area situated within radioelectric range,
- the permanent monitoring by said station and the reception of tracking messages (10a, 10b ... 10n) transmitted by neighbouring aerodynes located within radioelectric range,
- the identification by said station of the aerodynes in the vicinity and the determination of their respective future paths, by means of the navigational data contained in the received tracking messages,
- for each aerodyne identified, the localizing (13, 15) by said station of the future path of said aerodyne in said geographical area, the detection by said station of the risk of said aerodyne colliding with an obstacle of the relief, and
- if a risk of collision is detected by said station, the drawing up (14) by said station of the avoidance commands (18), to be executed by the pilot of the aerodyne to avoid the detected collision, and the transmission of these commands to the pilot in the form of an avoidance message.

2. The method according the claim 1, wherein a tracking message of the aerodyne comprises:
- its identification code,
- its airspeed, ground speed and vertical velocity,
- its real position in terms of longitude, latitude and altitude,
- its velocity vector.

3. The method according the claims 1 and 2, wherein said avoidance message comprises the last tracking message received from said aerodyne along with the avoidance commands (18) to be performed by the pilot of said aerodyne.

4. The method according one of the preceding claims, said method comprising:
- the omnidirectional transmission (17) of said avoidance message by said station,
- on board each aerodyne in the vicinity, the permanent monitoring and reception of avoidance messages transmitted by said station, the selection of said avoidance messages received concerning said aerodyne by means of its identification code, the transmission of avoidance commands (18) to the pilot of said aerodyne, and the transmission of an acknowledgement message.

5. The method according one of the preceding claims, wherein the station locates said path by means of a geographical data base (14) notably comprising the altitudes of a multiplicity of points evenly distributed over the entire geographical area.

6. The method according claims 2 to 5, wherein said station estimates the path of each aerodyne by means of the real position and velocity vector provided in the last tracking message received from said aerodyne, and estimates the position said aerodyne will occupy a predetermined period of time later.

7. The method according the claim 6, wherein, if the estimated path during said period of time intercepts an obstacle, the station determines (14) said avoidance commands from the following data:
- the real position (11) provided in the last tracking message and the estimated position (16),
- the airspeed and ground speed in said message,
- the configuration of the relief between said real position and said estimated position, provided by said cartographic data base (12),
- the height known as "decision" height Dh corresponding to the minimum height for overshooting and deferring the landing, provided by said data base (12),
- the respective estimated paths (19) of the other aerodynes within radioelectric range of said station.

8. The method according one of the preceding claims, wherein said tracking messages also comprise a "starting descent" indicator which indicates whether the aerodyne has begun the approach phase to the landing strip, the presence of this indicator in said tracking message being used by said station to determine which avoidance strategy to apply in the event of risk of collision.

9. The method according claims 1 to 7, wherein said tracking messages also comprise a "starting descent" indicator which indicates whether the aerodyne has begun the approach phase to the landing strip, the presence of this indicator in said tracking message indicating to said station that it must simply signal the presence of an obstacle and the distance thereto in the avoidance message returned.

10. A device for preventing collisions between an aerodyne and obstacles formed by the relief flown over,
characterized in that said device comprises :
- on board of said aerodyne, an ADS (Automatic Surveillance System) system (1, 6) connected to the electronic equipment (I1, I2, I3) of said aerodyne notably comprising navigation instrument and Hertzian waves transmitting (2) and receiving (3) means, and a box (4) identifying and transcoding the received messages, the ADS system (1,6) comprising periodical reading means of navigational data adapted to this aerodyne, and for elaborating tracking messages comprising a code identifying the aerodyne and the said navigational data, the transmitting and receiving (2, 3) means comprising means for omnidirectionaly transmitting the tracking messages via Hertzian waves to an air surveillance station for a geographical area situated within radioelectric range,
- in the said station, a computer linked up to Hertzian waves transmitting and receiving means and to a geographical data base describing said geographical area, the computer comprising means for identifying the neighbouring aerodynes and for determining their respective future path, by means of the navigational data contained in the received tracking messages, means for localizing the future path of each identified aerodyne in said geographical area and for detecting the risks of collision of said aerodyne with an obstacle the relief, and means for elaborating avoidance commands (18) to be executed by the pilot of the aerodyne, if a risk of collision of an identified aerodyne with an obstacle of the relief is detected, the transmitting and receiving means comprising permanently reading and receiving means of the tracking messages (10a, 10b... 10n) transmitted by the neighbouring aerodynes, and means for transmitting the elaborated avoidance commands, in the form of an avoidance message, to the pilot of the aerodyne for which a risk of collision is detected.
